Europäisches Patentamt

European Patent Office

Office européen des brevets

(11) Veröffentlichungsnummer: **0 400 489**
**A2**

## EUROPÄISCHE PATENTANMELDUNG

(21) Anmeldenummer: 90109919.2

(51) Int. Cl.⁵: **G08B 21/00**

(22) Anmeldetag: 25.05.90

(30) Priorität: 02.06.89 DE 3917996

(43) Veröffentlichungstag der Anmeldung:
05.12.90 Patentblatt 90/49

(84) Benannte Vertragsstaaten:
AT CH DE FR GB IT LI SE

(71) Anmelder: HAMACHER LEUCHTEN GMBH
Westerholter Strasse 791
D-4352 Herten / Westfalen(DE)

(72) Erfinder: Golabek, Tadeusz
Armii Czerwonej 83 a
PL-40161 Katowice(PL)
Erfinder: Karolczak, Zdzislaw
Armii Czerwonej 83 a
PL-40161 Katowice(PL)
Erfinder: Lozak, Jan
Lewicka 9m 25
PL-02547 Warszawa(PL)
Erfinder: Dreyer, Johannes
Smetanaweg 38
D-4270 Dorsten(DE)

(74) Vertreter: Gesthuysen, Hans Dieter, Dipl.-Ing.
et al
Patentanwälte Gesthuysen + von Rohr
Huyssenallee 15 Postfach 10 13 33
D-4300 Essen 1(DE)

(54) Ortungssystem, insbesondere für den untertägigen Bergbau.

(57) Ein Ortungssystem, insbesondere für den untertägigen Bergbau, mit einem von einer zu ortenden Person zu tragenden Ortungssender (1) und einem von einer suchenden Person od. dgl. zu tragenden Ortungsempfänger (2), bei dem vom Ortungssender (1) ausgesandte elektromagnetische Wellen vom Ortungsempfänger (2) empfangen und ortungstechnisch ausgewertet werden, bei dem der Ortungssender (1) im Bedarfsfalle einschaltbar und zu gegebener Zeit auch wieder ausschaltbar ist, ist noch sicherer und flexibler einsetzbar, indem zusätzlich ein Fernschaltsender (6) vorgesehen ist, indem der Ortungssender (1) auch als Empfänger für vom Fernschaltsender (6) ausgesandte elektromagnetische Wellen ausgeführt ist, indem der Ortungssender (1) im Ruhezustand in Empfangsfunktion steht und erst bei Empfang von vom Fernschaltsender (6) ausgesandten elektromagnetischen Wellen die Sendefunktion eingeschaltet wird.

Fig.1

EP 0 400 489 A2

## Ortungssystem, insbesondere für den untertägigen Bergbau

Die Erfindung betrifft ein Ortungssystem, insbesondere für den untertägigen Bergbau, mit einem von einer zu ortenden Person zu tragenden Ortungssender und einem von einer suchenden Person od. dgl. zu tragenden Ortungsempfänger, wobei vom Ortungssender ausgesandte elektromagnetische Wellen vom Ortungsempfänger empfangen und ortungstechnisch ausgewertet werden, wobei der Ortungssender im Bedarfsfalle einschaltbar und zu gegebener Zeit auch wieder ausschaltbar ist.

Das aus der Praxis bekannte Ortungssystem, von dem die Erfindung ausgeht, ist für den untertägigen Bergbau bestimmt und weist zunächst einen von einer zu ortenden Person getragenen, nämlich dort beispielsweise in das Gehäuse des Kopflampen-Akkumulators eingebauten Ortungssender auf. Der Ortungssender sendet elektromagnetische Wellen einer bestimmten Frequenz, vorzugsweise einer für den speziellen Ortungssender spezifischen Frequenz, aus. Dies tut der Ortungssender im Regelfall nur dann, wenn er von Hand eingeschaltet worden ist oder automatisch bei einem Sturz der den Ortungssender tragenden Person oder bei Auftreten einer Explosion mit Überschreitung einer bestimmten Druckschwelle eingeschaltet wird. Die vom Ortungssender ausgesandten elektromagnetischen Wellen können auch in Form von Impulsfolgen kodiert sein, so daß es möglich ist, eine Vielzahl von Ortungssendern voneinander unterscheidbar zu halten. Normale Ausstattungsdetails des bekannten Ortungssenders sind Batterien und/oder Akkumulatoren und eine insgesamt eigensichere Ausführung.

Der Ortungsempfänger des bekannten Ortungssystems ist als tragbares Gerät ausgeführt und kann beispielsweise von einem Grubenretter an einem Tragriemen um den Hals oder über die Schulter gehängt getragen werden. Auch der Ortungsempfänger ist zweckmäßigerweise eigensicher ausgeführt und weist eine entsprechende, als Peilantenne geeignete Antenne auf. Durch trigonometrische Zweipunkt-Ortung oder durch Gradienten-Ortung läßt sich neben der Richtung auch noch die Entfernung eines Ortungssenders ermitteln.

Das zuvor erläuterte, bislang bekannte Ortungssystem ist noch nicht sicher genug, da der Ortungssender bei Unfällen häufig nicht eingeschaltet ist bzw. dann, wenn er eingeschaltet ist, seine Batterie bzw. sein Akkumulator nach relativ kurzer Zeit erschöpft ist, so daß der an sich eingeschaltete Ortungssender gleichwohl kein Ortungssignal aussendet, wenn schließlich die Grubenretter sich der Unfallstelle zu nähern beginnen. Außerdem sollte das Ortungssystem noch flexibler einsetzbar sein. Der Erfindung liegt folglich die Aufgabe zugrunde, ein Ortungssystem der in Rede stehenden Art anzugeben, das gegenüber dem Stand der Technik noch sicherer und flexibler einsetzbar ist.

Die zuvor aufgezeigte Aufgabe ist bei dem erfindungsgemäßen Ortungssystem dadurch gelöst, daß zusätzlich ein Fernschaltsender vorgesehen ist, daß der Ortungssender auch als Empfänger für vom Fernschaltsender ausgesandte elektromagnetische Wellen ausgeführt ist, daß der Ortungssender im Ruhezustand in Empfangsfunktion steht und erst bei Empfang von vom Fernschaltsender ausgesandten elektromagnetischen Wellen die Sendefunktion eingeschaltet wird. Erfindungsgemäß wird also im Ortungssystem ein zusätzliches Systemelement verwendet, nämlich der Fernschaltsender, der dazu dient, den Ortungssender der zu ortenden Person im Bedarfsfalle überhaupt erst zu aktivieren, also in Sendefunktion zu schalten. Zu diesem Zweck ist der Ortungssender selbst gleichzeitig auch als Empfänger ausgestaltet, so daß er die vom Fernschaltsender ausgesandten elektromagnetischen Wellen, die in der zuvor erläuterten Weise ebenfalls wieder kodiert sein können, empfangen kann. Hat der Ortungssender die vom Fernschaltsender ausgesandten elektromagnetischen Wellen empfangen, so wird die Sendefunktion eingeschaltet, so daß der beispielsweise vom Grubenretter getragene Ortungsempfänger die vom Ortungssender ausgesandten elektromagnetischen Wellen empfangen kann. Dadurch wird erreicht, daß der Ortungssender immer dann auch wirklich eingeschaltet wird, wenn das erforderlich ist, nämlich dann, wenn unter Einsatz eines entsprechenden Fernschaltsenders beispielsweise verschüttete Personen gesucht werden. Dies geschieht unabhängig von einer Tätigkeit der den Ortungssender tragenden Person, auch wenn diese beispielsweise bewußtlos ist, wird der Ortungssender sicher eingeschaltet. Der Ortungssender wird aber auch nur dann eingeschaltet, wenn das ortungstechnisch einen Sinn macht, nämlich nur dann, wenn ein Ortungsempfänger in der Nähe ist. Die Reichweite des Fernschaltsenders ist dazu natürlich ungefähr auf die Reichweite des Ortungssenders abzustimmen. Auf diese Weise wird gewährleistet, daß der Ortungssender nicht unter Verbrauch der wertvollen elektrischen Energie aus der Batterie sinnlos arbeitet, sondern erst dann und nur dann arbeitet, wenn es ortungstechnisch sinnvoll ist.

Um Störeinflüsse, die ja im untertägigen Bergbau als Beispielfall für die Anwendung des erfindungsgemäßen Ortungssystems vielfältig vorhanden sind, soweit wie möglich auszuschließen, sollten die jeweils ausgesandten elektromagnetischen Wellen in bestimmter Form kodiert, beispielsweise auf bestimmte Trägerfrequenzen beschränkt und/oder auf bestimmte Impulsfolgen kodiert sein.

Es gibt nun eine Vielzahl von Möglichkeiten, das erfindungsgemäße Ortungssystem auszugestalten und weiterzubilden, wozu einerseits auf die dem Anspruch 1 nachgeordneten Ansprüche verwiesen werden darf, andererseits auf die Erläuterung eines bevorzugten Ausführungsbeispiels der Erfindung anhand der Zeichnung hingewiesen werden darf. In der Zeichnung zeigt

Fig. 1 in einer schematischen Darstellung ein Ausführungsbeispiel des erfindungsgemäßen Ortungssystems,

Fig. 2 ein Blockschaltbild eines im erfindungsgemäßen Ortungssystem eingesetzten Ortungssenders,

Fig. 3 eine schematische Darstellung der mechanischen Gestaltung eines Beispiels eines solchen Ortungssenders und

Fig. 4 ein Blockschaltbild eines im erfindungsgemäßen Ortungssystem eingesetzten Fernschaltsenders.

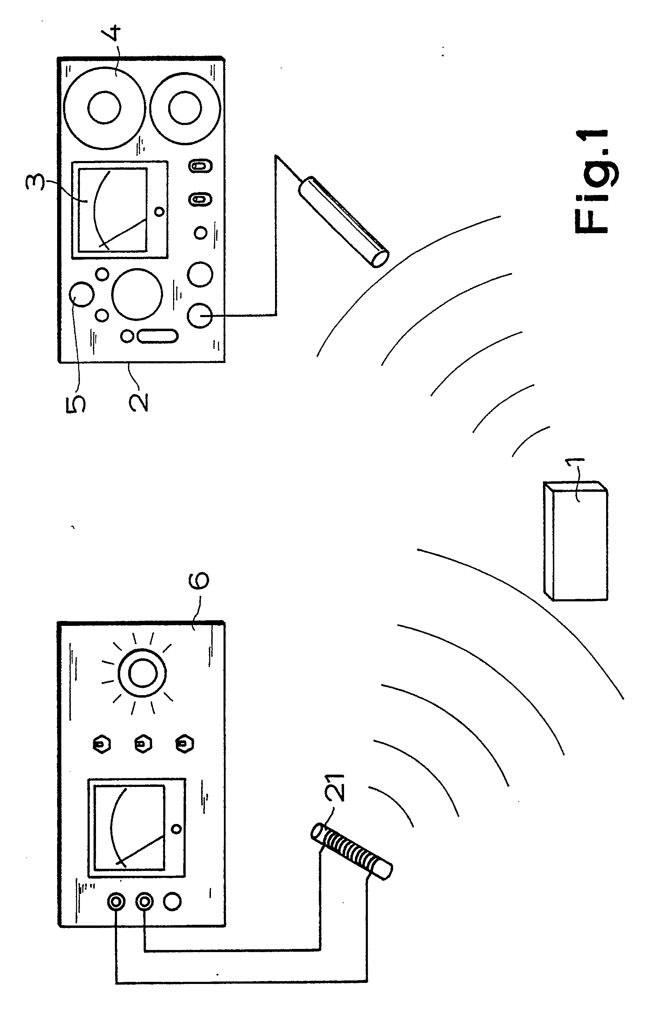

Fig. 1 zeigt den grundsätzlichen Aufbau des erfindungsgemäßen Ortungssystems, das sich insbesondere für den Einsatz im untertägigen Bergbau, beispielsweise zur Ortung und Rettung von verschütteten Bergleuten eignet. Anhand dieses Beispiels soll die Erfindung auch im weiteren Verlauf erläutert werden. Ungeachtet dessen bleibt festzuhalten, daß das erfindungsgemäße Ortungssystem auch an anderer Stelle, beispielsweise bei der Lawinenortung od. dgl. eingesetzt werden kann. Das erfindungsgemäße Ortungssystem kann auch im Rahmen von Personenschutzanlagen eingesetzt werden, beispielsweise um bei Transportbändern für Personen ein automatisches Abschalten an bestimmten Punkten vorzusehen, im Bereich von Arbeitsmaschinen bei Annäherung von Personen eine Sicherungsabschaltung auszulösen usw..

Das in Fig. 1 schematisch dargestellte Ortungssystem weist zunächst einen von einer zu ortenden Person zu tragenden Ortungssender 1 und einen von einer suchenden Person od. dgl. zu tragenden oder auch anderweitig angeordneten bzw. transportierten Ortungsempfänger 2 auf. Wie in Fig. 1 angedeutet ist, werden vom Ortungssender 1 ausgesandte elektromagnetische Wellen, ggf. in kodierter Form, vom Ortungsempfänger 2 empfangen und von diesem ortungstechnisch ausgewertet. Das kann mit Hilfe von Analoganzeigen 3, Akustikmeldern 4, Digitalanzeigen 5 und mit verschiedenen weiteren Auswertetechniken erfolgen. Der Ortungssender 1 ist im Bedarfsfalle einschaltbar und, selbstverständlich, zu gegebener Zeit auch wieder ausschaltbar.

Kerngedanke der Erfindung ist nun, daß zusätzlich zu dem Ortungssender 1 und dem Ortungsempfänger 2 ein drittes Systemteil vorhanden ist, nämlich ein Fernschaltsender 6. Der Ortungssender 1 ist dabei auch als Empfänger für vom Fernschaltsender 6 ausgesandte elektromagnetische Wellen, gleichfalls wieder mit bestimmter Frequenz bzw. in bestimmter Form kodiert, ausgeführt. Im Ruhezustand steht der Ortungssender 1 in Empfangsfunktion, in der er die vom Fernschaltsender 6 ausgesandten elektromagnetischen Wellen zu empfangen vermag. Erst bei Empfang von vom Fernschaltsender 6 ausgesandten elektromagnetischen Wellen wird der Ortungssender 1 in die Sendefunktion geschaltet. Erst dann also werden vom Ortungssender 1 die zur Ortung erforderlichen elektromagnetischen Wellen ausgesandt, erst dann tritt der mit der Sendefunktion des Ortungssenders 1 verbundene hohe Energieverbrauch auf. Der Ortungssender 1 arbeitet auf diese Weise also immer dann, aber auch nur dann, wenn das ortungstechnisch sinnvoll ist, unabhängig von einer Handhabung durch die zu ortende Person.

Für den Empfang der vom Fernschaltsender 6 ausgesandten elektromagnetischen Wellen bedarf der Ortungssender 1 nur geringer Energie. Folglich empfiehlt es sich, den Ortungssender 1 so zu gestalten, daß er in Empfangsfunktion nur einen minimalen Betriebsstrom von vorzugsweise nur wenigen $\mu$A benötigt.

Wie schon Fig. 1 andeutet, sollte die Reichweite des erfindungsgemäß vorhandenen Fernschaltsenders 6 auf die Reichweite des erfindungsgemäß als Empfänger und Sender ausgestalteten Ortungssenders 1 abgestimmt sein. Die Reichweite hat natürlich auch etwas mit den Umgebungsbedingungen, insbesondere den elektromagnetischen Störeinflüssen von sonstigen Einrichtungen zu tun, so daß sich hier eine gewisse Schwankungsbreite ergibt. Man wird aber beispielsweise auf eine Reichweite des Fernschaltsenders 6 von $\geq$ 25 m bei abgeschalteten Störeinrichtungen und auf eine Reichweite von $\geq$ 20 m für den Ortungssender 1 ebenfalls bei abgeschalteten Störeinrichtungen für den Bereich des untertägigen Bergbaus abstellen können.

Aus Gründen des Energieverbrauchs empfiehlt es sich, daß der Ortungssender 1 nach einer bestimmten, vorgegebenen Zeitspanne nach dem Einschalten der Sendefunktion die Sendefunktion automatisch wieder abschaltet. Die Einschaltzeit der Sendefunktion ist natürlich vom jeweiligen Einsatzzweck abhängig. Für den untertägigen Bergbau haben sich Einschaltzeiten zwischen 3 und 50 min., vorzugsweise zwischen 15 und 30 min., als sinnvoll erwiesen.

Man kann den Ortungssender 1 so betreiben, daß dieser in Sendefunktion auf einer bestimmten Sendefrequenz sendet, jedoch in Empfangsfunktion eine andere Empfangsfrequenz empfängt. Bei entsprechendem Abstand der beiden Frequenzen können auch bei nur einer vorhandenen Sende- und Empfangsantenne beide Funktionen gleichzeitig ablaufen, die Empfangsfunktion also erhalten bleiben, auch wenn die Sendefunktion eingeschaltet ist. Das hat den Vorteil, daß weiter einlaufende Fernschaltsignale den Ortungssender 1 immer wieder neu aktivieren bzw. auch über die eigentliche Abschaltzeit hinaus in der Sendefunktion halten. Schaltungstechnisch einfacher ist es allerdings, tatsächlich eine Umschaltung des Ortungssenders 1 aus der Empfangsfunktion in die Sendefunktion und umgekehrt vorzusehen, also beide Funktionen nicht parallel ablaufen zu lassen.

Im übrigen empfiehlt es sich, den Ortungssender 1 der Erfindung auch von Hand ausschaltbar, ggf. auch von Hand einschaltbar auszugestalten. Allerdings ist dabei Vorsorge dafür zu treffen, daß kein versehentliches Ein-oder Ausschalten des Ortungssenders 1 erfolgen kann, um die erfindungsgemäß erreichten Vorteile nicht wieder zu gefährden.

Wesentlich ist, daß der Ortungssender 1 nicht zufällig durch im untertägigen Bergbau vorhandene elektromagnetische Störfelder eingeschaltet werden kann, daß er also weitestgehend störsicher ausgestaltet ist. Dazu empfehlen sich die eingangs erläuterten Kodiermaßnahmen.

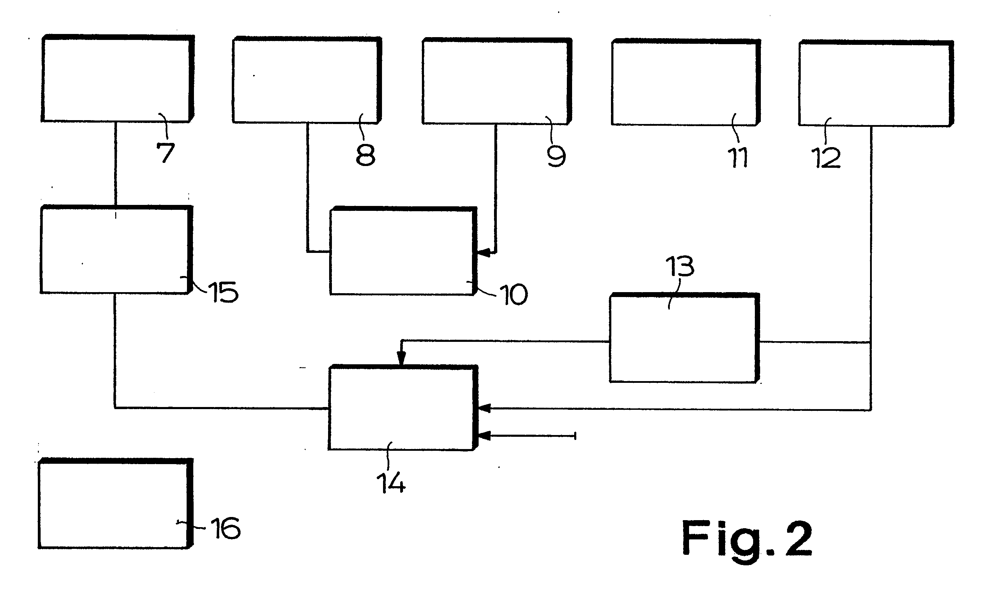

Das in Fig. 2 dargestellte Blockschaltbild des im erfindungsgemäßen Ortungssystem eingesetzten Ortungssenders 1 zeigt eine Sende- und Empfangsantenne 7, beispielsweise eine Ferritantenne oder eine Dipolantenne, und einen der Sende- und Empfangsantenne 7 nachgeschalteten Selektivverstärker 8 für die vorgesehene Fernschaltfrequenz. Dem Selektivverstärker 8 ist ein Detektor-Transformer 9 nachgeschaltet, wobei beide wiederum über eine automatische Verstärkungsregelung 10 rückgekoppelt sind. Dem Detektor-Transformer 9 ist im dargestellten Ausführungsbeispiel ein Impulsformer 11 nachgeschaltet, dem wiederum ein Impulsfolgedetektor 12 schaltungstechnisch folgt. An den Ausgang des Impulsfolgedetektors 12 ist einerseits ein Zeitgeber 13 zur Vorgabe der Einschaltzeit in Sendefunktion, andererseits ein Zustandsspeicher 14 angeschlossen. Der Zeitgeber 13 ist ausgangsseitig mit dem Zustandsspeicher 14 verbunden. Dem Zustandsspeicher 14 folgt schließlich ein ausgangsseitig an die Sende- und Empfangsantenne 7 angeschlossener Sendeimpulsgenerator 15. Dargestellt ist auch noch die für die eigensichere Spannungsversorgung des Ortungssenders 1 vorgesehene Batterie 16.

In Empfangsfunktion wird die vom Fernschaltsender 6 ausgesandte Fernschaltfrequenz über die Sende- und Empfangsantenne 7 empfangen. Die empfangenen Signale werden an den Selektivverstärker 8 weitergeleitet, der nur solche mit der vorgesehenen Frequenz verstärkt. Die Verstärkung wird abhängig vom Steuersignal der automatischen Verstärkungsregelung 10 geregelt. Im nachgeschalteten Detektor-Transformer 9 werden die Trägerfrequenz-Signale in Gleichstromimpulse transformiert, und zwar auf einem bestimmten Soll-Signalpegel. Im nachgeschalteten Impulsformer werden die verzerrten Impulse der Impulsfolge aus dem Detektor-Transformer 9 in auswertungstechnisch optimale Rechteckimpulse umgeformt. Der Impulsfolgedetektor 12 erkennt die richtig kodierte Impulsfolge. Läuft die richtige Impulsfolge ein, so wird der Zustandsspeicher 14 in den Aktivzustand geschaltet, was der Einschaltung der Sendefunktion entspricht. Der Zeitgeber 13 schaltet den Zustandsspeicher 14 nach Ablauf der vorgegebenen Einschaltzeit der Sendefunktion wieder zurück, so daß die Sendefunktion abgeschaltet wird. Vom Zustandsspeicher 14 angesteuert wird in der Sendefunktion der Sendeimpulsgenerator 15, der dann über die Sende- und Empfangsantenne 7 die Ortungsfrequenz, die vorzugsweise eine andere ist als die Fernschaltfrequenz, abgibt. Am Zustandsspeicher 14 ist durch einen Pfeil auch die externe, von Hand vorzugebende Möglichkeit zum Rücksetzen des Zustandsspeichers 14, also zum Abschalten der Sendefunktion angedeutet.

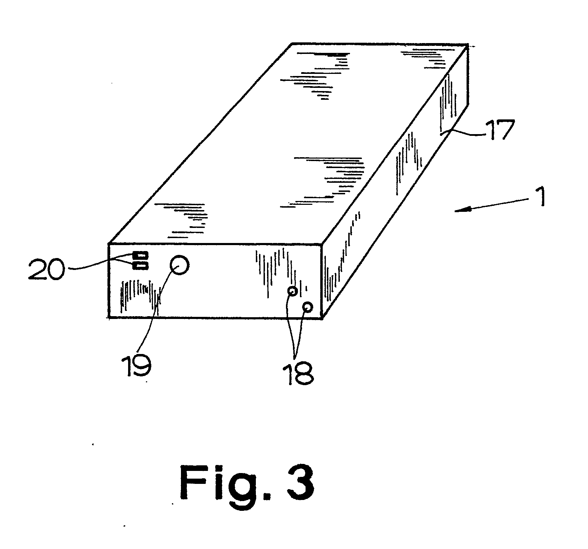

Fig. 3 macht den äußeren Aufbau eines Beispiels eines Ortungssenders 1 der in Rede stehenden Art deutlich. Dargestellt ist ein Gehäuse 17, das hinsichtlich Druckfestigkeit und Schlagfestigkeit den Anforderungen entsprechen sollte, die auch an Grubenlampen und Grubenakkumulatoren gestellt werden. Gleichwohl sollte dieses Gehäuse 17 möglichst leichtgewichtig sein, damit der Ortungssender 1 leicht getragen werden kann. An der Stirnseite des Gehäuses 17 erkennt man zwei Ausschaltkontakte 18, die einfach an die Außenseite des Gehäuses 17 geführt sind. Durch elektrisches Kurzschließen der Ausschaltkontakte 18 mit irgendeinem elektrisch leitenden Gegenstand kann der Ortungssender 1 ausgeschaltet, also aus der Sendefunktion herausgeschaltet werden. Dies ist eine sehr einfache Lösung, die sich aber in der Praxis sehr bewährt hat, da eine versehentliche Fehlbedienung äußerst selten ist. Fig. 3 zeigt im übrigen weiter im Gehäuse 17 eine optische Funktionsanzeige 19, hier in Form einer Leuchtdiode. Schließlich zeigt das Gehäuse auch noch zwei Massekontakte 20 der Batterie 16.

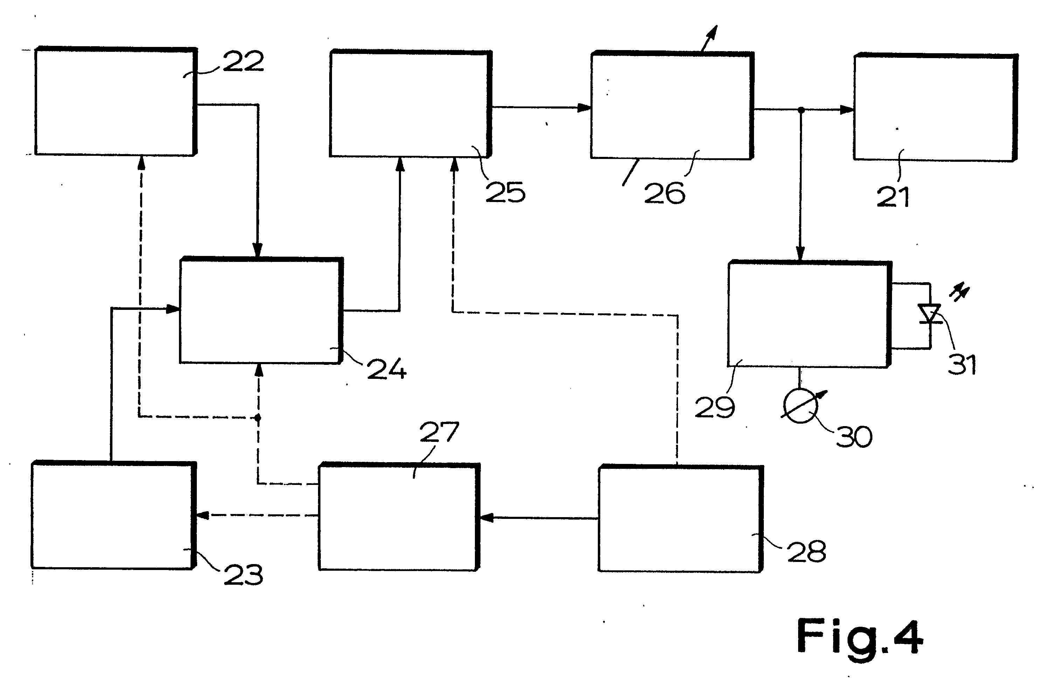

Der in Fig. 1 dargestellte und in Fig. 4 in einem Blockschaltbild näher gezeigte Fernschaltsender 6 sollte gleichfalls als transportables Gerät ausgeführt, insbesondere also von einer suchenden Person, beispielsweise einem Grubenretter, ohne weiteres tragbar sein. Für Ortungszwecke hat der Fernschaltsender 6 dabei zweckmäßigerweise eine große Reichweite und dementsprechend eine hohe Sendeleistung. Im einzelnen nicht dargestellt ist hierbei, daß der Fernschaltsender 6 eine Faltdipolantenne für große Entfernungen, insbesondere Entfernungen von 20 m und mehr, und/oder eine Ferritantenne (dargestellt in Fig. 1) für geringere Entfernungen, insbesondere Entfernungen bis zu 6 m, aufweist.

Für die Leistung des Fernschaltsenders 6 für große Reichweiten sind Werte von ca. 10 W sinnvoll.

Da die Sendeantenne, beispielsweise die Ferritantenne 21 des Fernschaltsenders 6 eine richtungsabhängige Charakteristik hat, empfiehlt es sich, den Fernschaltsender 6 zum Ferneinschalten des Ortungssenders 1 drei Mal nach einander zu aktivieren, wobei jeweils die Hauptebene der Sendekeule der Antenne des Fernschaltsenders 6 um 90° geschwenkt wird. Dann ist man sicher, daß man alle möglichen Empfangsebenen des Ortungssenders 1 getroffen hat.

Nicht dargestellt ist in Fig. 1 eine andere Möglichkeit, bei der der Fernschaltsender 6 eine geringe Reichweite, insbesondere eine Reichweite von weniger als 4 m, und dementsprechend eine geringe Sendeleistung aufweist. Ein solches System bietet sich beispielsweise im Rahmen eines Sicherheitssystems für Personen auf einem Personentransportband od. dgl. an. In diesem Fall empfiehlt es sich, daß dem Fernschaltsender 6 ein Alarmempfänger zugeordnet ist. Auch das ist hier nicht dargestellt. Der so mit niedriger Leistung ausgestattete Fernschaltsender 6 und der ggf. vorhandene Alarmempfänger sind dabei stationäre Einrichtungen, die dauerhaft an ausgewählten Stellen, beispielsweise im untertägigen Bergbau, angebracht sind und durch eine sich nähernde Person, die einen entsprechenden Ortungssender 1 trägt, aktiviert werden bzw. den Ortungssender 1 zuvor selbst aktivieren.

Fig. 4 zeigt in einem Blockschaltbild den schaltungstechnischen Aufbau eines Beispiels eines Fernschaltsenders 6. Der Fernschaltsender 6 weist in diesem Beispiel einen Impulsfolgegenerator 22, einen abstimmbaren Trägerfrequenzoszillator 23, eine Torschaltung 24, einen Ausgangsverstärker 25, eine Antennenabstimmung 26 und die zuvor schon angesprochene Antenne, beispielsweise eine Ferritantenne 21, auf. Weiter dargestellt sind noch ein Spannungsstabilisator 27, eine Batterie als Spannungsversorgung 28 und eine Strommeßschaltung 29 mit der Möglichkeit einer Analogmessung 30 und einer digitalen Leuchtanzeige 31, mit deren Hilfe die optimale Abstimmung der Antenne 21 möglich ist.

Um den Fernschaltsender 6 auf die Mehrzahl von Ortungssendern 1 mit unterschiedlichen Trägerfrequenzen bzw. Impulsfolgefrequenzen abstimmen zu können, empfiehlt es sich, daß der Trägerfrequenzoszillator 23 durch den gesamten Sendefrequenzbereich wobbelbar ist. Das kann mit unterschiedlichen, auf die Anwendungsfälle abgestimmten Geschwindigkeiten geschehen.

Der Impulsfolgegenerator 22 des in Fig. 4 dargestellten Fernschaltsenders 6 kann beispielsweise im Zyklus 1 : 15 arbeiten, mit einer Impulssequenz im ersten Takt und 15 Pausentakten. Der Trägerfrequenzoszillator 23 erzeugt die Trägerfrequenz. Er kann im Sendefrequenzbereich gewobbelt werden. Die Torschaltung 24 ermöglicht den Durchgang der Trägerfrequenz in dem durch den Impulsfolgegenerator 22 vorgegebenen Bereichen. Die von der Torschaltung 24 abgegebenen Impulse werden im Ausgangsverstärker 25 verstärkt. Mittels der Antennenabstimmung 26 kann die Ausgangsschaltung auf die unterschiedlich einschaltbaren Antennentypen - Faltdipolantenne, Ferritantenne od. dgl. - abgestimmt werden. Die Abstimmsteuerung wird durch die Schaltung 29, 30, 31 ermöglicht. Der Spannungsstabilisator 27 stabilisiert die Speisespannung, um Störeinflüsse von dieser Seite her zu eliminieren.

**Ansprüche**

1. Ortungssystem, insbesondere für den untertägigen Bergbau, mit einem von einer zu ortenden Person zu tragenden Ortungssender und einem von einer suchenden Person od. dgl. zu tragenden Ortungsempfänger, wobei vom Ortungssender ausgesandte elektromagnetische Wellen vom Ortungsempfänger empfangen und ortungstechnisch ausgewertet werden, wobei der Ortungssender im Bedarfsfalle einschaltbar und zu gegebener Zeit auch wieder ausschaltbar ist, **dadurch gekennzeichnet, daß** zusätzlich ein Fernschaltsender (6) vorgesehen ist, daß der Ortungssender (1) auch als Empfänger für vom Fernschaltsender (6) ausgesandte elektromagnetische Wellen ausgeführt ist, daß der Ortungssender (1) im Ruhezustand in Empfangsfunktion steht und erst bei Empfang von vom Fernschaltsender (6) ausgesandten elektromagnetischen Wellen die Sendefunktion eingeschaltet wird.

2. Ortungssystem nach Anspruch 1, dadurch gekennzeichnet, daß der Ortungssender (1) in Empfangsfunktion einen minimierten Betriebsstrom von vorzugsweise nur wenigen µA aufweist.

3. Ortungssystem nach Anspruch 1 oder 2, dadurch gekennzeichnet, daß der Ortungssender (1) nach einer bestimmten, vorgegebenen Zeitspanne nach dem Einschalten der Sendefunktion die Sendefunktion automatisch wieder abschaltet.

4. Ortungssystem nach Anspruch 3, dadurch gekennzeichnet, daß die Einschaltzeit der Sendefunktion etwa 3 bis 50 min., vorzugsweise etwa 15 bis 30 min., beträgt.

5. Ortungssystem nach einem der Ansprüche 1 bis 4, dadurch gekennzeichnet, daß der Ortungssender (1) aus der Empfangsfunktion in die Sendefunktion und umgekehrt umschaltbar ist.

6. Ortungssystem nach einem der Ansprüche 1 bis 5, dadurch gekennzeichnet, daß der Ortungssender (1) von Hand ausschaltbar, ggf. auch von Hand einschaltbar, ist.

7. Ortungssystem nach einem der Ansprüche 1 bis 6, dadurch gekennzeichnet, daß der Ortungssender (1) eine Sende- und Empfangsantenne (7), beispielsweise eine Ferritantenne, einen der Sende- und Empfangsantenne (7) nachgeschalteten Selektivverstärker (8) für die vorgesehene Fernschaltfrequenz, einen dem Selektivverstärker (8) nachgeschalteten Detektor-Transformer (9), ggf. einen dem Detektor-Transformer (9) nachgeschalteten Impulsformer (11), einen nachgeschalteten Impulsfolgedetektor (12), einen dem Impulsfolgedetektor (12) nachgeschalteten Zeitgeber (13) sowie einen Zustandsspeicher (14) und einen ausgangsseitig an die Sende- und Empfangsantenne (7) angeschlossenen Sendeimpulsgenerator (15) aufweist.

8. Ortungssystem nach einem der Ansprüche 1 bis 7, dadurch gekennzeichnet, daß zwei Ausschaltkontakte (18) an die Außenseite eines Gehäuses (17) des Ortungssenders (1) geführt sind und daß durch elektrisches Kurzschließen der Ausschaltkontakte (18) mit irgendeinem elektrisch leitenden Gegenstand der Ortungssender (1) ausschaltbar ist.

9. Ortungssystem nach einem der Ansprüche 1 bis 8, dadurch gekennzeichnet, daß eine optische Funktionsanzeige (19) am Gehäuse (17) des Ortungssenders (1) vorgesehen ist.

10. Ortungssystem nach einem der Ansprüche 1 bis 9, dadurch gekennzeichnet, daß der Fernschaltsender (6) als transportables Gerät ausgeführt, insbesondere also von einer suchenden Person tragbar ist.

11. Ortungssystem nach einem der Ansprüche 1 bis 10, dadurch gekennzeichnet, daß der Fernschaltsender (6) für Ortungszwecke eine große Reichweite und dazu eine entsprechend hohe Sendeleistung, vorzugsweise eine Sendeleistung von etwa 10 W, aufweist.

12. Ortungssystem nach einem der Ansprüche 1 bis 11, dadurch gekennzeichnet, daß der Fernschaltsender (6) eine Faltdipolantenne für große Entfernungen, insbesondere Entfernungen von 20 m und mehr, und/oder eine Ferritantenne für geringe Entfernungen, insbesondere Entfernungen bis zu 6 m, aufweist.

13. Ortungssystem nach einem der Ansprüche 1 bis 10 und ggf. Anspruch 12, dadurch gekennzeichnet, daß der Fernschaltsender (6) eine geringe Reichweite, insbesondere eine Reichweite von weniger als 4 m, und eine entsprechend geringe Sendeleistung aufweist.

14. Ortungssystem nach Anspruch 13, dadurch gekennzeichnet, daß dem Fernschaltsender (6) ein Alarmempfänger zugeordnet ist.

15. Ortungssystem nach Anspruch 13 oder 14, dadurch gekennzeichnet, daß der Fernschaltsender (6) und ggf. der Alarmempfänger ortsfest an einem Transportband od. dgl. angeordnet ist bzw. sind.

16. Ortungssystem nach einem der Ansprüche 1 bis 15, dadurch gekennzeichnet, daß der Fernschaltsender (6) einen Impulsfolgegenerator (22), einen abstimmbaren Trägerfrequenzoszillator (23), eine Torschaltung (24), einen Ausgangsverstärker (25) und eine Antennenabstimmung (26) aufweist.

17. Ortungssystem nach einem der Ansprüche 1 bis 16, dadurch gekennzeichnet, daß der Trägerfrequenzoszillator (23) durch den gesamten Sendefrequenzbereich wobbelbar ist.

Fig.1

Fig. 2

# Fig. 3

Fig.4